# EUROPÄISCHE PATENTSCHRIFT

(11) **EP 3 251 196 B1**
(45) Veröffentlichungstag und Bekanntmachung des Hinweises auf die Patenterteilung: **12.06.2019**
(21) Anmeldenummer: 16701963.7
(22) Anmeldetag: 29.01.2016
(51) Int. Cl.: H02K 3/493, C09J 11/00, H02K 15/00

(54) **SELBSTKLEBENDE NUTVERSCHLUSSVORRICHTUNG FÜR EINE ELEKTRISCHE MASCHINE**
SELF-ADHESIVE GROOVE CLOSURE DEVICE FOR AN ELECTRIC MACHINE
DISPOSITIF AUTOCOLLANT DE FERMETURE D'ENCOCHE POUR UNE MACHINE ÉLECTRIQUE

(30) Priorität: 26.03.2015 EP 15161100
(43) Veröffentlichungstag der Anmeldung: 06.12.2017
(73) Patentinhaber: Siemens Aktiengesellschaft, 80333 München (DE)
(72) Erfinder: GRÜBEL, André, 97486 Königsberg I. Bay./Hellingen (DE); SCHIRM, Dieter, 96149 Breitengüssbach (DE)
(86) Internationale Anmeldenummer: PCT/EP2016/051951
(87) Internationale Veröffentlichungsnummer: WO 2016/150595

(56) Entgegenhaltungen:
- DE-A1- 1 538 935
- JP-A- S56 161 486

## Beschreibung

Die Erfindung betrifft eine Nutverschlussvorrichtung zum Verschließen einer Nut eines Stators oder eines Läufers einer elektrischen Maschine. Durch die Nutverschlussvorrichtung können elektrische Leitelemente, beispielsweise Kupferstäbe, durch welche eine Drehstromwicklung gebildet ist, in der Nut fixiert oder gehalten werden. Zu der Erfindung gehören auch eine Vorrichtung, die als Stator oder Läufer ausgestaltet sein kann, sowie ein Verfahren zum Verschließen einer Nut des Stators beziehungsweise Läufers.

Die Nuten von elektrischen Maschinen dienen der Aufnahme der isolierten elektrischen Leitelemente beziehungsweise einer Anordnung solcher Leitelemente. Die Nuten weisen in der Regel eine Nutöffnung auf, die zum Luftspalt der elektrischen Maschine hin gerichtet ist. Über die Nutöffnung können bei der Herstellung der elektrischen Maschine die Leitelemente in die Nut eingelegt werden. Insbesondere bei Hochspannungsmaschinen wird mit sogenannten offenen Nuten gearbeitet, bei welchen die Nutöffnung sich über die komplette Nutbreite erstreckt.

Die Nutöffnung muss nach dem Einlegen der Leitelemente verschlossen werden, um ein Aufsteigen der Leitelemente aus der Nut während des Betriebs der elektrischen Maschine zu verhindern. Der Nutverschluss wird üblicherweise mit festen Verschlusselementen, sogenannten Nutkeilen, erreicht. Diese Nutkeile können zum Beispiel aus technischen Schichtpressstoffen durch mechanische Verarbeitung gefertigt sein. Genauso können sie aus thermoplastischen oder duroplastischen Formmassen durch Strangextrusion oder Spritzguss gefertigt sein.

Die Nutverschlussmaterialien können nicht-magnetisierbare Verbundstoffe sein, die somit nicht effektiv zur Magnetisierbarkeit des Stators beitragen, wodurch der Leistungsfaktor, Wirkungsgrad und die Erwärmung und somit resistive Verluste ungünstige Werte aufweisen können.

Um die magnetische Flussführung im Bereich der Nutöffnung zu verbessern, können Nutverschlüsse teilweise weichmagnetisch ausgeführt sein, beispielsweise mittels eisengefüllter ferritischer Schichtpressstoffe. Eine solche Nutverschlussvorrichtung ist beispielsweise aus der EP 2 706 649 A1 bekannt.

Wesentlicher Nachteil bei weichmagnetischen Nutverschlussvorrichtungen ist, dass auf Grund des verwendeten harten Materials der dauerhafte Festsitz in der Nut nicht gewährleistet werden kann, da das weichmagnetische Material auf Grund der magnetischen Wechselbelastungen im Betrieb der Maschine in Kombination mit thermischer Belastung, thermomechanischer Wechselbelastung und Umwelteinflüssen eine Eigenbewegung ausführt, durch welche sich die Nutverschlussvorrichtung losrütteln kann.

Aus der DE 15 38 935 A ist hier zu bekannt, einen Nutkeil zusammen mit einem Kunststoffteil in die Nut einzufügen, wobei das Kunststoffteil dazu ausgelegt ist, bei Erwärmung sein Volumen zu vergrößern und das vergrößerte Volumen auch bei nachfolgender Abkühlung beizubehalten. Nachteilig bei dieser Anordnung ist, dass zum Verschließen einer Nut zunächst eine genaue Anordnung des Kunststoffteils zwischen einer Nutwand und dem Nutkeil nötig ist, bevor die Fixierung durch Erwärmen des Kunststoffteils möglich ist. Dies macht den Arbeitsschritt des Anordnens des Nutkeils in der Nut sehr aufwändig.

Aus der JP S56 161486 A geht ein Verfahren zum Laminieren von Holzschichten mit einem Klebstoff sowie das Zusammenfügen der laminierten Holzschichten hervor. Die Holzschichten werden durch einen Wärmeeintrag in einer Presse zusammengefügt. Dabei härtet der Klebstoff aus. Der Klebstoff selbst enthält Mikrokugeln.

Aus der US 4,303,736 A sind Mikrokugeln mit Gasfüllung und Überdruck bekannt.

Der Erfindung liegt die Aufgabe zu Grunde, mit geringem Zeitaufwand eine Nut einer elektrischen Maschine zu verschließen.

Die Aufgabe wird durch die Gegenstände der unabhängigen Patentansprüche gelöst. Vorteilhafte Weiterbildungen der Erfindung ergeben sich durch die Merkmale der abhängigen Ansprüche.

Die Erfindung umfasst eine Nutverschlussvorrichtung zum Verschließen einer Nut eines Stators oder eines Läufers einer elektrischen Maschine. Als Läufer kann beispielsweise ein Läufer eines Linearmotors oder ein Rotor einer Rotationsmaschine vorgesehen sein. Die Nutverschlussvorrichtung weist ein Verschlusselement auf, das ein ferromagnetisches Material aufweist, z.B. Eisen.

Bei der erfindungsgemäßen Nutverschlussvorrichtung ist dieses Verschlusselement derart vorkonfektioniert, dass es mit geringem Arbeitsaufwand in einer Nut angeordnet und fixiert werden kann. Hierzu ist an dem Verschlusselement eine Klebeschicht angeordnet. Die Klebeschicht weist ein thermisch aktivierbar ausgestaltetes Treibmittel auf. Mit anderen Worten dehnen sich Elemente des Treibmittels aus, sobald eine vorbestimmte Expansionstemperatur erreicht oder überschritten ist. Des Weiteren ist die Klebeschicht dazu ausgebildet, thermisch gehärtet zu werden. Mit anderen Worten bewirkt das Erwärmen oder Erhitzen der Klebeschicht drei Vorgänge. Zunächst erfolgt das Wiedererweichen oder Verflüssigen des Klebers und zugleich die Expansion des Treibmittels, gefolgt von der Vernetzung oder Polymerisation des Klebers, wodurch auch nach anschließendem Abkühlen die Klebeschicht ihr vergrößertes Volumen beibehält. Die Klebeschicht quillt durch das Erhitzen auf und härtet aus. Der Klebstoff für die Klebeschicht kann beispielsweise auf einem Duroplast basieren, insbesondere einem Epoxid oder einem Derivat eines Epoxids. Das Verschlusselement kann in an sich bekannter Weise beispielsweise mit einem trapezförmigen Querschnitt ausgestaltet sein, das heißt den eigentlichen Nutkeil zum Verschließen einer Nut bilden. An dem Verschlusselement können auch mehrere Klebeschichten der beschriebenen Art angeordnet sein.

Erfindungsgemäß weist die Klebeschicht als das Treibmittel mindestens ein Expansionselement auf. Das Expansionselement weist mindestens einen geschlossenen, mit einem Gas gefüllten Hohlraum auf. Als Expansionselement kann beispielsweise eine Hohlkugel oder ein geschlossenporiger Schaum bereitgestellt sein. Hierdurch ergibt sich der Vorteil, dass eine mechanische Expansion bewirkt wird anstelle einer chemischen Expansion. Eine chemische Expansion erfordert unter Umständen eine höhere Expansionstemperatur.

Erfindungsgemäß ist bei jedem Expansionselement der Hohlraum mindestens teilweise durch einen thermoplastischen Kunststoff umschlossen. Hierdurch ergibt sich der Vorteil, dass durch Wahl des Kunststoffes die Expansionstemperatur einstellbar ist. Ein weiterer Vorteil ist, dass mit der Erwärmung des Kunststoffes das Expansionselement weicher wird und hierdurch die Expansion vereinfacht oder begünstigt ist.

Erfindungsgemäß ist ein Druck des Gases in dem jeweiligen Hohlraum größer 1,1 bar, insbesondere 1,5 bar. Mit anderen Worten ist der Druck des Gases größer als der Atmosphärendruck. Hierdurch ergibt sich der Vorteil, dass nach dem Expandieren das Expansionselement beim Abkühlen nicht schrumpft.

Zu der Erfindung gehören auch Weiterbildungen, durch welche sich zusätzliche Vorteile ergeben.

Gemäß einer Weiterbildung weist die Klebeschicht einen Klebstoff auf Basis eines Reaktionsharzes im B-Zustand auf. Mit anderen Worten ist der Klebstoff teilweise ausgehärtet. Hierdurch ergibt sich der Vorteil, dass der Klebstoff der Klebeschicht selbsthaftend ist, das heißt nicht vom Verschlusselement herunter fließt oder abfließt.

Gemäß einer Weiterbildung ist die Wiedererweichungstemperatur des B-Zustandes auf einen Wert in einem Bereich von 50°C bis 250°C, bevorzugt von 50°C bis 150°C, insbesondere 70°C bis 120°C, eingestellt. Eine Wiedererweichungstemperatur oberhalb von 50°C, beispielsweise 70°C, weist den Vorteil auf, dass eine versehentliche Erweichung des Klebstoffes beispielsweise während eines Transports der Nutverschlussvorrichtung hin zu einem Werk für elektrische Maschinen, vermieden wird. Das Einstellen der Widererweichungstemperatur kann durch entsprechende Wahl eines Reaktionsharzes erreicht werden.

Gemäß einer Weiterbildung ist eine Expansionstemperatur des mindestens einen Expansionselements in einem Bereich von 50°C bis 250°C, bevorzugt in einem Bereich von 50°C bis 150°C, insbesondere in einem Bereich von 70°C bis 120°C eingestellt. Hierdurch ergibt sich der Vorteil, dass zum Auslösen der Expansion eine Temperatur nötig ist, die niedriger ist als für eine chemische Expansion. Falls ein chemisches Treibmittel zur Verfügung steht, das eine geringere Expansionstemperatur als die Verflüssigungstemperatur der verwendeten Haftschichten aufweist, kann auch ein chemisches Treibmittel verwendet werden, z.B. ein Granulat, das bei der Expansionstemperatur in einen gasförmigen Zustand übergeht.

Gemäß einer Weiterbildung sind mehrere Expansionselemente bereitgestellt, wobei ein mittlerer Durchmesser d50 der Expansionselemente in einem Bereich von 1 Mikrometer bis 50 Mikrometer liegt. Der mittlere Durchmesser ist insbesondere der statistische Mittelwert einer Gauß-verteilten Durchmesserverteilung. Die Expansionselemente sind dazu ausgelegt, im Expandierten Zustand einen mittleren Durchmesser in einem Bereich von 20 Mikrometer bis 200 Mikrometer, bevorzugt von 50 Mikrometer bis 200 Mikrometer aufzuweisen. Dies stellt einen festen Sitz des Verschlusselements in einer Nut sicher.

Gemäß einer Weiterbildung weist das Verschlusselement, beispielsweise der Nutkeil, gegeneinander elektrisch isolierte, ferromagnetische Blechschichten auf. Eine jeweilige Erstreckungsebene jeder Blechschicht ist senkrecht zu einer Längserstreckungsrichtung des Verschlusselements ausgerichtet. Mit anderen Worten sind die Blechschichten des Verschlusselements nach dem Anordnen in einem Statorblechpaket oder Läuferblechpaket koplanar oder parallel zu den Blechschichten des Blechpakets des Stators beziehungsweise Rotors ausgerichtet. Hierdurch ergibt sich der Vorteil, dass auch in dem Verschlusselement keine Wirbelströme beim Betrieb der elektrischen Maschine induziert werden können.

Die Nutverschlussvorrichtung lässt sich unabhängig von einem Läufer oder Stator bereitstellen, das heißt sie ist als Zuliefererteil zum Herstellen eines Stators oder Läufers ausgestaltet. Nach dem Einbau einer Nutverschlussvorrichtung gemäß der Erfindung in einen Stator oder Läufer ergibt sich eine ebenfalls zur Erfindung gehörende Vorrichtung, welche als Stator oder Läufer für eine elektrische Maschine ausgestaltet ist, wobei in zumindest einer Nut der Vorrichtung elektrische Leitelemente einer Drehstromwicklung angeordnet sind und die Nut mit einem Nutkeil gemäß einer Ausführungsform der Erfindung verschlossen ist. Als Läufer kann die Vorrichtung in der beschriebenen Weise als Rotor oder als Läufer eines Linearmotors ausgestaltet sein.

Zu der Erfindung gehört auch ein Verfahren zum Verschließen einer Nut eines Stators oder Läufers einer elektrischen Maschine. Es wird eine Ausführungsform der erfindungsgemäßen Nutverschlussvorrichtung bereitgestellt und diese in der Nut angeordnet. Es erfolgt das Erwärmen der Klebeschicht der Nutverschlussvorrichtung, zumindest bis zu einer Temperatur, bei welcher das mindestens eine Expansionselement der Klebeschicht expandiert, also bis mindestens zur Expansionstemperatur. Der Kleber (z.B. ausgehend von einem B-Zustand) erweicht wieder und durchläuft dabei ein temperatur- und zeitabhängiges Viskositätsminimum. Dabei quillt die Klebeschicht auf und härtet anschließend, nicht wiedererweichbar, aus. Wodurch die Klebeschicht auch nach anschließendem Abkühlen ihr vergrößertes Volumen beibehält.

Gemäß einer Weiterbildung wird eine Abmessung der Nutverschlussvorrichtung derart gewählt, dass ein Querschnitt der Nutverschlussvorrichtung inklusive der Klebeschicht kleiner als ein korrespondierender Nutquerschnitt der Nut ist. Hierdurch wird verhindert, dass beim Einschieben der Nutverschlussvorrichtung in die Nut entlang einer axialen Richtung des Läufers oder Stators die Klebeschicht an einer Nutwandung der Nut abgestreift wird.

Das in der Nut angeordnete Verschlusselement wird gemäß einer Weiterbildung in Bezug auf Nutwände der Nut berührungsfrei in der Nut angeordnet. Hierdurch ergibt sich der Vorteil, dass die Nutwände bezüglich des Verschlusselements elektrisch isoliert sind. Es ist damit die Ausbildung eines Strompfads zwischen dem Blechpaket des Stators beziehungsweise Läufers einerseits und dem Verschlusselement andererseits verhindert. Damit kann es zu keiner Induktion eines Wirbelstroms kommen, der zischen dem Verschlusselement einerseits und dem Blechpaket andererseits fließt.

Gemäß einer Weiterbildung wird die Nutverschlussvorrichtung nach dem Anordnen in der Nut an zumindest einem Nutende der Nut, insbesondere beiden Nutzenden der Nut, mittels eines nicht-ferromagnetischen Halteelements in der Nut fixiert. Hierdurch ergibt sich der Vorteil, dass die Relativlage des Verschlusselements bezüglich der Nutwände auch dann erhalten bleibt, wenn durch Erhitzen der Klebeschicht der Klebstoff in der Klebeschicht verflüssigt wird und hierdurch seine stützende Eigenschaft vorübergehend verliert.

Das Erwärmen der Klebschicht kann durch eine Wärmebehandlung in einem Umluftofen und/oder durch induktives Erwärmen des Verschlusselements der Nutverschlussvorrichtung und/oder des Stators/Läufers bewirkt werden. Durch Erwärmen des Verschlusselements und/oder des Blechpakets des Stators/Läufers ergibt sich der Vorteil, dass die Wärme gleichmäßig verteilt wird und somit die Klebeschicht vollständig in den ausgehärteten Zustand überführt werden kann.

Das Verschlusselement kann aus Blechstücken hergestellt werden, die beim Ausstanzen von Nutquerschnitten in Blechen für ein Blechpaket der elektrischen Maschine erzeugt wurden. Hierdurch ergibt sich der Vorteil, dass der Ausschuss oder die Verschwendung von Blech beim Herstellen der elektrischen Maschine verringert wird.

Im Folgenden ist ein Ausführungsbeispiel der Erfindung beschrieben. Hierzu zeigt:
- FIG 1: eine schematische Darstellung einer elektrischen Maschine mit einer Ausführungsform der erfindungsgemäßen Vorrichtung;
- FIG 2: eine schematische Darstellung einer Nut, die sich in einem Stator oder einem Rotor der elektrischen Maschine von FIG 1 befinden kann;
- FIG 3: eine schematische Darstellung einer Nutverschlussvorrichtung, mit welchem die Nut von FIG 2 verschlossen sein kann;
- FIG 4: eine schematische Darstellung einer Klebeschicht, die durch das Nutverschlussvorrichtung von FIG 3 bereitgestellt sein kann.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

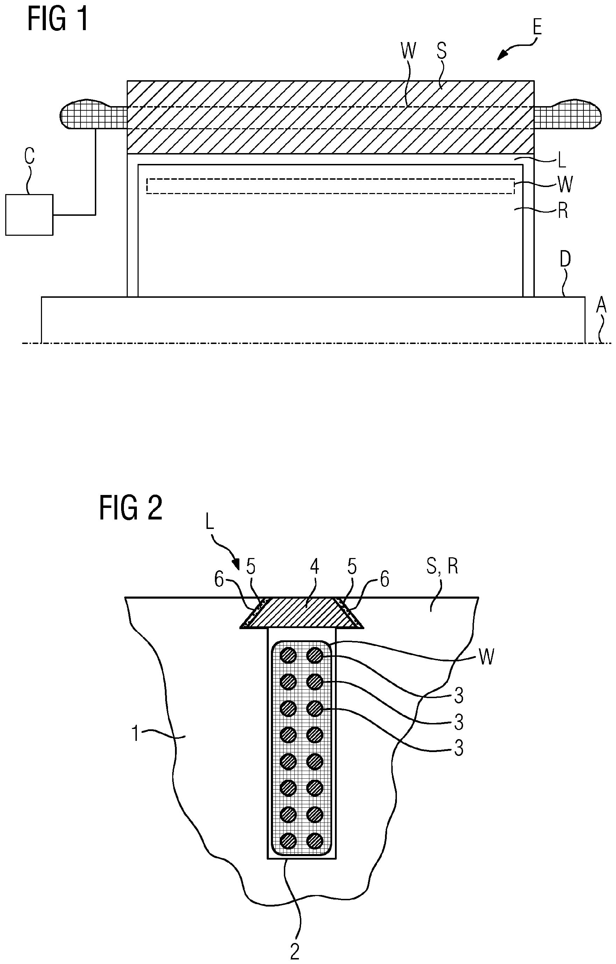

In FIG 1 ist ein Längsschnitt einer elektrischen Maschine E gezeigt, bei der es sich beispielsweise um eine Synchronmaschine oder eine Asynchronmaschine handeln kann. In FIG 1 stellt eine Rotationsachse A auch eine Symmetrieachse der Darstellung dar. Die elektrische Maschine E umfasst einen Stator S, in welchem Wicklungen W elektrischer Spulen angeordnet sind, wobei in FIG 1 nur eine der Wicklungen W dargestellt ist. Die Wicklungen W können aus Leitelementen, z.B. Drähten oder Stäben, gebildet sein. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz.

Im Inneren des Stators S befindet sich ein Rotor R, der drehfest mit einer Welle D verbunden ist. Die Welle D ist um die Rotationsachse A drehbar in dem Stator S gelagert. In dem Rotor R können ebenfalls Wicklungen W aus Leitelementen angeordnet sein.

Der Rotor R und/oder der Stator S können jeweils eine Ausführungsform der erfindungsgemäßen Vorrichtung sein.

FIG 2 zeigt einen Ausschnitt aus einem Querschnitt, bei dem es sich um einen Querschnitt des Stators S oder des Rotors R handeln kann. In einem Blechpaket 1 des Stators beziehungsweise Rotors können Nuten 2 vorgesehen sein, von denen in FIG 2 der Übersichtlichkeit halber nur eine dargestellt ist. Eine Längserstreckungsrichtung der Nut 2 ist parallel zur Rotationsachse A ausgerichtet. Sie ist senkrecht zur Zeichenebene von FIG 2 ausgerichtet.

In der Nut 2 kann eine der Wicklungen W angeordnet sein, das heißt Leitelemente 3 der Wicklung W erstrecken sich in axialer Richtung in der Nut 2. Der Übersichtlichkeit halber sind in FIG 2 nur einige der Leitelemente 3 mit einem Bezugszeichen versehen. Die Nut 2 ist zum Luftspalt L hin durch ein Verschlusselement 4 verschlossen, das durch eine ausgehärtete Klebeschicht 5 in einem Hinterschnitt 6 der Nut 2 gehalten ist. Die Klebeschicht 5 ist derart dick, dass das Verschlusselement 4 in dem Hinterschnitt 6 spielfrei gehalten ist. Dennoch konnte das Verschlusselement 4 zusammen mit der noch nicht ausgehärteten Klebeschicht 5 in einem einzigen Arbeitsschritt in die Nut 2 eingeschoben werden, wobei das Verschlusselement 4 zusammen mit der Klebeschicht 5 in axialer Richtung von einem axialen Ende des Blechpakets 1 aus entlang einer Längserstreckungsrichtung des Hinterschnitts 6 in die Nut eingeschoben wurde.

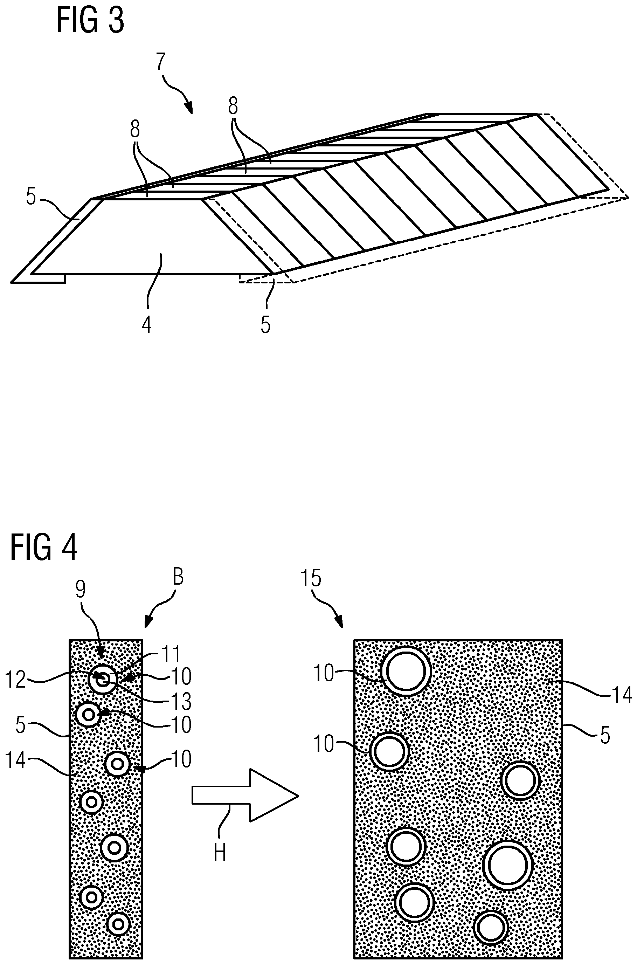

Hierzu wurden das Verschlusselement 4 zusammen mit der Klebeschicht 5 als eine Nutverschlussvorrichtung 7 bereitgestellt, wie sie in FIG 3 dargestellt ist. Das Verschlusselement 4 kann hergestellt werden, indem gegeneinander elektrisch isolierte ferromagnetische Blechschichten 8 zusammengestapelt oder aufeinander gestapelt werden und erhitzt werden. In FIG 3 sind der Übersichtlichkeit halber nur einige der Blechschichten 8 mit einem Bezugszeichen versehen. Die Isolierung und Verklebung der Blechschichten kann mittels eines sogenannten Backlacks erfolgen. Dies ist an sich aus der Herstellung von Blechpakten, wie dem Blechpaket 1, bekannt. An dem Verschlusselement 4 ist die Klebeschicht 5 angeordnet, wobei sich ein Klebstoff der Klebeschicht 5 in einen B-Zustand, also einem teilpolymerisierten Zustand, befindet. Hierdurch bleibt die Klebeschicht 5 an dem Verschlusselement 4 haften und tropft beispielsweise nicht von dem Verschlusselement 4 ab.

Die Nutverschlussvorrichtung 7 kann in der beschriebenen Weise in axialer Richtung in den Hinterschnitt 6 eingeschoben werden. Anschließend kann die Klebeschicht erhitzt werden.

In FIG 4 ist veranschaulicht, wie in der Klebeschicht 5 ein Treibmittel 9 bereitgestellt werden kann, welches einzelne Expansionselemente 10 umfasst. In FIG 4 sind der Übersichtlichkeit halber nur einige Expansionselemente 10 mit einem Bezugszeichen versehen. Jedes Expansionselement 10 kann beispielsweise als eine Mikrospähre ausgestaltet sein, das heißt eine Hohlkugel 11, die beispielsweise aus einem thermoplastischen Kunststoff bereitgestellt oder hergestellt sein kann.

In der Hohlkugel 11 ist in einem Hohlraum 12 ein Gas 13 angeordnet. Das Gas 13 weist einen Druck auf, der größer ist als 1,1 bar, insbesondere größer als 1,5 bar ist.

Durch Zuführen von Hitze H wird ein Klebstoff 14 der Klebeschicht 5 weich oder flüssig. Des Weiteren expandieren die Expansionselemente 10. Hierdurch quillt die Klebeschicht 5 auf und härtet anschließend aus, wodurch auch nach anschließendem Abkühlen der Kleber sein vergrößertes Volumen beibehält. Es ergibt sich ein gehärteter Zustand 15. Durch das Aufquillen wird das Verschlusselement 4 zwischen gegenüberliegenden Wandungen des Hinterschnitts 6 einerseits eingeklemmt oder festgeklemmt und andererseits verklebt.

Eine Größe eines Querschnitts des Nutverschlusselements 7 ist auf das Blechpaket, insbesondere eine Nutbreite der Nut 2 im Bereich des Hinterschnitts 6 abgestimmt. Der Hinterschnitt 6 bildet eine Schiene für das Verschlusselement. Beim Einschieben des Nutverschlusselements 7 kann auf Grund des Blechpaketversatzes einzelner Elektrobleche des Blechpakets 1 Klebstoff beim Einschieben abgestreift werden, wodurch die notwendige flächige Verklebung des Verschlusselements nicht gewährleistet wäre. Daher wird eine Abmessung des Nutverschlusselements derart klein gewählt, dass das Nutverschlusselements 7 inklusive seiner Klebeschicht 5 schmaler ist oder eine geringere Abmessung aufweist, als die Nut 2 im Bereich des Hinterschnitts 6. Hierdurch lässt sich das Nutverschlussvorrichtung 7 in die Nut 2 ohne Abstreifen von Klebstoff einschieben. Indem die Klebeschicht 5 nach dem Abkühlen den expandierten Zustand 15 aufweist, sitzt dennoch das Verschlusselement 4 fest in der Nut.

Nach dem Einschieben der Nutverschlussvorrichtung 7 in die Nut, kann die Nutverschlussvorrichtung 7 an den axialen Blechpaketenden mit nicht-magnetischen Nutverschlusskeilen fixiert werden, um die bis zur Expansion der Klebeschicht und Polymerisation des Klebstoffs 14 vorübergehend zu fixieren. Die thermisch angeregte Expansion und die Polymerisation können durch eine Wärmebehandlung im Umluftofen oder durch induktives Erwärmen der Nutverschlussvorrichtung 7 erfolgen oder erreicht werden.

Durch Bereitstellen eines mit einer Klebeschicht 5 vorkonfektionierten Verschlusselements 4, das heißt durch Bereitstellen der Nutverschlussvorrichtung 7 ergibt sich ein einfacher Applikationsprozess von festen, magnetischen Nutverschlusskeilen, d.h. Verschlusselementen, in einer elektrischen Maschine. Es ist die vollständige Anbindung des Nutkeils über die axiale als auch radiale Blechpaketdimension gewährleistet. Es kann sogar eine Verbesserung des Haftsitzes erreicht werden. Dabei ist die Anzahl der Prozessschritte minimalisiert, da keine zusätzliche Klebeapplikation nötig ist.

Durch Schichtung des Verschlusselements 4 ergibt sich eine erhöhte magnetische Ausnutzung bei gleichzeitiger erhöhter thermischer und mechanischer Robustheit durch Einsatz der geschichteten Backlackbleche. Indem zur Bereitstellung der Blechschichten 8 diejenigen Blechteile verwendet werden, die beim Ausstanzen eines Profils der Nut 2 in den einzelnen Blechen des Blechpakets 1 anfallen, kann eine nahezu vollständige Ausnutzung des Blechpaketschnitts erfolgen.

Insgesamt zeigt das Beispiel, wie durch die Erfindung ein eingeklebter magnetischer Nutverschluss für eine elektrische Maschine bereitgestellt werden kann.

## Patentansprüche

1. Nutverschlussvorrichtung (7) zum Verschließen einer Nut (2) eines Stators (S) oder eines Läufers (R) einer elektrischen Maschine (E), mit einem Verschlusselement (4), das ein ferromagnetisches Material aufweist, wobei an dem Verschlusselement (4) eine Klebeschicht (5) angeordnet ist und die Klebeschicht (5) ein thermisch aktivierbar ausgestaltetes Treibmittel (9) aufweist und die Klebeschicht (5) dazu ausgelegt ist, durch Erhitzen (H) gehärtet zu werden, **dadurch gekennzeichnet, dass** in der Klebeschicht (5) als das Treibmittel (9) mindestens ein Expansionselement (10), welches mindestens einen geschlossenen, mit einem Gas (13) gefüllten Hohlraum (12) aufweist, bereitgestellt ist, wobei bei jedem Expansionselement (10) der Hohlraum (12) zumindest teilweise durch einen thermoplastischen Kunststoff (11) umschlossen ist, wobei der Druck des Gases (13) in dem Hohlraum (12) vor der Expansion größer als 1,1 bar ist, so dass der thermoplastische Kunststoff (11) unter Zuführen von Hitze (H) expandiert.

2. Nutverschlussvorrichtung (7) nach Anspruch 1, wobei die Klebeschicht (5) einen Klebstoff (14) auf Basis eines Reaktionsharzes im B-Zustand (B) aufweist.

3. Nutverschlussvorrichtung (7) nach Anspruch 2, wobei eine Wiedererweichungstemperatur des B-Zustandes (B) einen Wert in einem Bereich von 50°C bis 250°C, bevorzugt von 50°C bis 150°C, insbesondere 70°C bis 120°C, aufweist.

4. Nutverschlussvorrichtung (7) nach einem der vorhergehenden Ansprüche, wobei der Druck des Gases (13) in dem Hohlraum (12) vor der Expansion größer als 1,5 bar ist.

5. Nutverschlussvorrichtung (7) nach einem der vorhergehenden Ansprüche, wobei eine Expansionstemperatur des mindestens einen Expansionselements (10) in einem Bereich von 50°C bis 250°C, bevorzugt in einem Bereich von 50°C bis 150°C, insbesondere von 70°C bis 120°C liegt.

6. Nutverschlussvorrichtung (7) nach einem der vorhergehenden Ansprüche, wobei mehrere Expansionselemente (10) bereitgestellt sind und ein mittlerer Durchmesser d50 der Expansionselemente (10) in einem Bereich von 1 Mikrometer bis 50 Mikrometer liegt, wobei die Expansionselemente (10) dazu ausgelegt sind, im expandierten Zustand einen mittlerer Durchmesser in einem Bereich von 20 Mikrometer bis 200 Mikrometer, bevorzugt von 50 Mikrometer bis 200 Mikrometer, aufzuweisen.

7. Nutverschlussvorrichtung (7) nach einem der vorhergehenden Ansprüche, wobei das Verschlusselement (4) gegeneinander elektrisch isolierte, ferromagnetische Blechschichten (8) aufweist, wobei eine jeweilige Erstreckungsebene jeder Blechschicht (8) senkrecht zu einer Längserstreckungsrichtung des Verschlusselements (4) ausgerichtet ist.

8. Vorrichtung, welche als Stator (S) oder Läufer (R) für eine elektrische Maschine (E) ausgestaltet ist, wobei in zumindest einer Nut (2) der Vorrichtung elektrische Leitelemente (3) einer Drehstromwicklung (W) angeordnet sind und die Nut (2) mit einem Nutverschlusselement (7) nach einem der vorhergehenden Ansprüche verschlossen ist, deren Klebeschicht (5) expandiert und ausgehärtet ist.

9. Verfahren zum Verschließen einer Nut (2) eines Stators (S) oder Läufers (R) einer elektrischen Maschine (R), wobei das Verfahren die folgenden Schritte umfasst:
- Bereitstellen einer Nutverschlussvorrichtung (7) nach einem der Ansprüche 1 bis 7,
- Anordnen der Nutverschlussvorrichtung (7) in der Nut (2),
- Erwärmen (H) der Klebeschicht (5) der Nutverschlussvorrichtung (7), zumindest bis das mindestens eine Expansionselement (10) der Klebeschicht (5) der Nutverschlussvorrichtung (7) expandiert und hierdurch die Klebeschicht (5) aufquillt,
- Aushärten der Klebeschicht (5),
- Abkühlen der Klebeschicht (5).

10. Verfahren nach Anspruch 9, wobei eine Abmessung der Nutverschlussvorrichtung (7) derart gewählt wird, dass ein Querschnitt der Nutverschlussvorrichtung (7) inklusive der Klebeschicht (5) kleiner als ein Nutquerschnitt der Nut (7) ist.

11. Verfahren nach Anspruch 9 oder 10, wobei das Verschlusselement (4) in Bezug auf Nutwände der Nut (2) berührungsfrei in der Nut (2) angeordnet wird.

12. Verfahren nach Anspruch 9 oder 11, wobei die Nutverschlussvorrichtung (7) nach dem Anordnen in der Nut (2) an zumindest einem Nutende der Nut mittels eines nicht-ferromagnetischen Halteelements in der Nut (2) fixiert wird.

## Claims

1. Slot-closing device (7) for closing a slot (2) in a stator (S) or rotor (R) of an electric machine (E), comprising a closure element (4) that contains a ferromagnetic material, wherein an adhesive layer (5) is disposed on the closure element (4) and the adhesive layer (5) contains a thermally activatable blowing agent (9) and the adhesive layer (5) is designed to be hardened under the effect of heat (H), **characterised in that** at least one expansion element (10) is provided as the blowing agent (9) in the adhesive layer (5), which expansion element (10) contains at least one closed cavity (12) filled with a gas (13), wherein the cavity (12) in each expansion element (10) is at least partially enclosed by a thermoplastic resin (11), wherein the pressure of the gas (13) in the cavity (12) prior to the expansion is greater than 1.1 bar, so that the thermoplastic resin (11) expands when heat (H) is applied to it.

2. Slot-closing device (7) according to claim 1, wherein the adhesive layer (5) contains an adhesive agent (14) based on a reaction resin in the B stage (B).

3. Slot-closing device (7) according to claim 2, wherein a resoftening temperature of the B stage (B) has a value in a range from 50°C to 250°C, preferably from 50°C to 150°C, in particular from 70°C to 120°C.

4. Slot-closing device (7) according to one of the preceding claims, wherein a pressure of the gas (13) in the cavity (12) prior to the expansion is greater than 1.5 bar.

5. Slot-closing device (7) according to one of the preceding claims, wherein an expansion temperature of the at least one expansion element (10) lies in a range from 50°C to 250°C, preferably in a range from 50°C to 150°C, in particular from 70°C to 120°C.

6. Slot-closing device (7) according to one of the preceding claims, wherein a plurality of expansion elements (10) are provided and an average diameter d50 of the expansion elements (10) lies in a range from 1 micrometre to 50 micrometres, wherein the expansion elements (10) are designed to have an average diameter in a range from 20 micrometres to 200 micrometres, preferably from 50 micrometres to 200 micrometres, in the expanded state.

7. Slot-closing device (7) according to one of the preceding claims, wherein the closure element (4) has ferromagnetic sheet-metal lamination layers (8) that are electrically insulated from one another, wherein a respective extension plane of each sheet-metal lamination layer (8) is oriented perpendicularly to a longitudinal extension direction of the closure element (4).

8. Device which is embodied as a stator (S) or rotor (R) for an electric machine (E), wherein electrical conductive elements (3) of a three-phase winding (W) are disposed in at least one slot (2) of the device and the slot (2) is closed by means of a slot closure element (7) according to one of the preceding claims, the adhesive layer (5) of which has expanded and hardened.

9. Method for closing a slot (2) in a stator (S) or rotor (R) of an electric machine (R), wherein the method comprises the following steps:
- providing a slot-closing device (7) according to one of claims 1 to 7,
- disposing the slot-closing device (7) in the slot (2),
- heating (H) the adhesive layer (5) of the slot-closing device (7), at least until the at least one expansion element (10) of the adhesive layer (5) of the slow-closing device (7) expands and as a result the adhesive layer (5) swells,
- curing the adhesive layer (5),
- cooling down the adhesive layer (5).

10. Method according to claim 9, wherein a dimension of the slot-closing device (7) is chosen such that a cross-section of the slot-closing device (7) including the adhesive layer (5) is smaller than a slot cross-section of the slot (7).

11. Method according to claim 9 or 10, wherein the closure element (4) is arranged contactlessly in the slot (2) in relation to slot walls of the slot (2).

12. Method according to claim 9 or 11, wherein after being arranged in the slot (2) the slot-closing device (7) is fixed in position in the slot (2) at at least one slot end of the slot by means of a non-ferromagnetic retaining element.

## Revendications

1. Dispositif (7) de fermeture d'encoche pour fermer une encoche (2) d'un stator (S) ou d'un rotor (R) d'une machine (1) électrique, comprenant un élément (4) de fermeture, qui a un matériau ferromagnétique, une couche (5) de colle étant disposée sur l'élément (4) de fermeture et la couche (5) de colle ayant un agent (9) porogène conformé de manière à pouvoir être activé thermiquement et la couche (5) de colle étant conçue pour être durcie par chauffage (H), **caractérisé en ce qu'**il est mis dans la couche (5) de colle, comme agent (9) porogène, au moins un élément (10) d'expansion, qui a au moins une cavité (12) fermée emplie d'un gaz (13), dans lequel, pour chaque élément (10) d'expansion, la cavité (12) est entourée, au moins en partie, d'une matière (11) plastique thermoplastique, la pression du gaz (13) dans la cavité (12) avant expansion étant plus grande que 1,1 bar, de sorte que la matière (11) plastique thermoplastique s'expanse par apport de chaleur (H).

2. Dispositif (7) de fermeture d'encoche suivant la revendication 1, dans lequel la couche (5) de colle a une colle (14) à base d'une résine de réaction à l'état B (B).

3. Dispositif (7) de fermeture d'encoche suivant la revendication 2, dans lequel une température de ramollissement de l'état B (B) a une valeur dans la plage de 50°C à 250°C, de préférence de 50°C à 150°C, notamment de 70°C à 120°C.

4. Dispositif (7) de fermeture d'encoche suivant l'une des revendications précédentes, dans lequel la pression du gaz (13) dans la cavité (12) avant l'expansion est plus grande que 1,5 bar.

5. Dispositif (7) de fermeture d'encoche suivant l'une des revendications précédentes, dans lequel une température d'expansion du au moins un élément (10 ) d'expansion est dans une plage de 50°C à 250°C, de préférence dans une plage de 50°C à 150°C, notamment de 70°C à 120°C.

6. Dispositif (7) de fermeture d'encoche suivant l'une des revendications précédentes, dans lequel il y a plusieurs éléments (10 ) d'expansion et un diamètre d50 moyen des éléments (10 ) d'expansion se trouve dans une plage de 1 micron à 50 microns, les éléments (10 ) d'expansion étant conçus pour avoir, dans l'état expansé, un diamètre moyen dans une plage de 20 microns à 200 microns, de préférence de 50 microns à 200 microns.

7. Dispositif (7) de fermeture d'encoche suivant l'une des revendications précédentes, dans lequel l'élément (4) de fermeture a des couches (8) de tôle ferromagnétiques isolées électriquement les unes des autres, un plan d'étendue respective de chaque couche (8) de tôle étant perpendiculaire à une direction d'étendue longitudinale de l'élément (4) de fermeture.

8. Dispositif, qui est conformé en stator (S) ou en rotor (R) d'une machine (1) électrique, dans lequel des éléments (3) conducteurs de l'électricité d'un enroulement (W) de courant triphasé sont disposés dans au moins une encoche (2) du dispositif et l'encoche (2) est fermée par un élément (7) de fermeture d'encoche suivant l'une des revendications précédentes, dont la couche (5) de colle est expansée et durcie.

9. Procédé de fermeture d'une encoche (2) d'un stator (S) ou d'un rotor (R) d'une machine (R) électrique, le procédé comprenant les stades suivants :
- on se procure un dispositif (7) de fermeture d'encoche suivant l'une des revendications 1 à 7,
- on met le dispositif (7) de fermeture d'encoche dans l'encoche (2),
- on échauffe (H) la couche (5) de colle du dispositif (7) de fermeture d'encoche, au moins jusqu'à ce que le au moins un élément (10) d'expansion de la couche (5) de colle du dispositif (7) de fermeture d'encoche s'expanse et fasse gonfler ainsi la couche (5) de colle,
- on durcit la couche (5) de colle,
- on refroidit la couche (5) de colle.

10. Procédé suivant la revendication 9, dans lequel on choisit une dimension du dispositif (7) de fermeture d'encoche, de manière à ce qu'une section transversale du dispositif (7) de fermeture d'encoche, y compris la couche (5) de colle, soit plus petite qu'une section transversale de l'encoche (7).

11. Procédé suivant la revendication 9 ou 10, dans lequel on met l'élément (4) de fermeture dans l'encoche (2), sans contact avec les parois de l'encoche (2).

12. Procédé suivant la revendication 9 ou 11, dans lequel le dispositif (7) de fermeture d'encoche est, après avoir été mis dans l'encoche (2), immobilisé dans l'encoche (2) sur au moins une extrémité de l'encoche au moyen d'un élément de maintien non-ferromagnétique.
